# EUROPÄISCHE PATENTSCHRIFT

(11) **EP 1 050 365 B1**
(45) Veröffentlichungstag und Bekanntmachung des Hinweises auf die Patenterteilung: **15.02.2006**
(21) Anmeldenummer: 00109239.4
(22) Anmeldetag: 28.04.2000
(51) Int. Cl.: B23Q 3/18, B25B 11/00, B23Q 1/03, B23Q 3/10

(54) **Halterungssystem für die Aufnahme von Werkstücken**
Support system for holding workpieces
Système de support pour la réception de pièces à usiner

(30) Priorität: 03.05.1999 DE 29908178 U; 30.06.1999 DE 29911395 U
(43) Veröffentlichungstag der Anmeldung: 08.11.2000
(73) Patentinhaber: Volkswagen Aktiengesellschaft, 38436 Wolfsburg (DE); Junker & Partner GmbH, 66636 Tholey (DE)
(72) Erfinder: Junker, Franz-Rudolf, 66636 Tholey-Sotzweiler (DE); Zweiniger, Siegfried, 30900 Wedemark (DE); Gellert, Klaus-Dieter, 30926 Seelze (DE); Zemke, Karsten, 30900 Wedemark (DE)

(56) Entgegenhaltungen:
- EP-A- 0 219 856
- DE-A- 4 132 655
- DE-A- 4 337 859
- DE-U- 8 605 593
- DE-U- 9 307 092
- GB-A- 764 351
- US-A- 3 681 834
- US-A- 4 794 687
- US-A- 5 026 033
- US-A- 5 364 083
- US-A- 5 562 276
- US-A- 5 722 646

## Beschreibung

Die Erfindung betrifft ein Halterungssystem für die Anordnung von Werkstücken gemäß dem Oberbegriff des Anspruchs 1.

Solche Halterungssysteme werden in der Automobilindustrie, insbesondere in den Entwicklungs- und Designabteilungen, im Rahmen der Vermessung von z.B. Karosserieteilen oder Fahrzeuginnenverkleidungen eingesetzt. Dabei wird das gehalterte Werkstück durch eine Längenmeßeinrichtung, z.B. einen Meßtaster aufweisenden Koordinaten-meßeinrichtung, an interessierenden Stellen abgetastet. Die Halterungsteile sind in bezug auf die Längenmeßeinrichtung in einer bestimmten Position angeordnet, wobei durch die Längenmeßeinrichtung gespeicherte Positionswerte von Halterungsteilen als Bezugswerte für die Ermittlung von Werkstückabmessungen dienen können.

Es sind durch Benutzung Halterungssysteme der eingangs erwähnten Art bekannt, welche als Hauptbauelemente horizontal und vertikal montierbare Trägerteile mit einer Rasteranordnung von Paßbohrungen aufweisen, über die sowohl Verbindungen zwischen den Trägerteilen selbst als auch zwischen den Trägerteilen und auf den Trägerteilen angeordneten Werkstückaufnehmerteilen herstellbar sind. Die wegen der Genauigkeitsanforderungen unter hohem Fertigungsaufwand erzeugten Paßbohrungen werden jeweils nur zu einem geringen Anteil genutzt.

Aus der DE 41 32 655 A1 ist eine Vorrichtung zur Positionierung eines Werkstückes bekannt, die die Merkmale des Oberbegriffs von Anspruch 1 aufweist. Insbesondere sind auf einer Grundplatte parallel zueinander verlaufende T-förmige Nuten ausgebildet. Als Träger dienen säulenartige Bauteile mit weitgehend quadratischem Querschnitt, an deren Längsschmalseiten sich ebenfalls T-förmige Führungsnuten befinden. An ihrem, unteren Ende weisen die Trägerbauteile jeweils ein Gleitstück zur Führung und Befestigung in den Führungsnuten der Grundplatte auf. Um zusätzlich eine feste Rasterung zu erreichen, sind in den Führungsnuten in definierten Abständen zueinander Rasterpunkte vorgesehen, die durch zueinander passende Formschlußelemente in den Führungsnuten einerseits und an den Gleitstücken andererseits verwirklicht sind.

Der Erfindung liegt die Aufgabe zugrunde, ein neues Halterungssystem der eingangs erwähnten Art zu schaffen, durch das sich gegenüber dem oben erwähnten Halterungssystem bei verbesserter Variabilität Halterungen mit geringerem Aufwand herstellen und errichten lassen.

Das diese Aufgabe lösende Halterungssystem nach der Erfindung ist im Anspruch 1 definiert.

Zur Montage auf der Basisplatte können die Trägersäulen über die Nutensteine mit der Basisplatte verbunden werden, wobei vorteilhaft Paßsitze gebildet sind, die eine reproduzierbare Verbindung der Trägersäulen mit den Nutensteinen ermöglichen. Bei einer Demontage der Halterung können die fixierten Nutensteine mit den Paßsitzen auf der Basisplatte verbleiben, so daß auf der Basisplatte Montagepaßsitze gebildet sind, die bei der Wiedererrichtung der Halterung eine positionsgenaue Anordnung der Trägersäulen auf der Basisplatte sichern. Vorteilhaft läßt sich die Halterung dann mit geringem Aufwand nach einer Demontage wiedererrichten, wobei die Anordnung der Trägerstempel in bezug auf die Basisplatte und die Anordnung der Tragerstempel in bezug zueinander genau der Anordnung vor der Demontage entspricht. In einer Meßeinrichtung gespeicherte, die Halterung betreffende Bezugswerte können so ohne Neukalibrierung der aus der Halterung und der Meßeinrichtung gebildeten Meßanordnung weiterverwendet werden.

Gemäß dieser Erfindungslösung läßt sich im Baukastenprinzip mit vergleichsweise geringem Fertigungs- und Montageaufwand eine Werkstückhalterung errichten, deren Trägerköpfe entsprechend der Form des Werkstücks in unterschiedlichen Raumpositionen angeordnet sind. Das auf einer Seite durch die Tragersäulen gehalterte, insbesondere abgestützte, Werkstück ist auf der anderen Seite zur Meßabtastung uneingeschränkt zugänglich. Durch die nur stellenweise Abstützung über die Trägersäulen besteht jedoch auch die Möglichkeit für Meßabtastungen auf der den Trägersäulen zugewandten Werkstückseite. Wie die Errichtung der Halterung erfordert auch ihre Demontage keinen großen Aufwand, und die demontierten Trägersäulen können bis zu einer Wiedererrichtung der Halterung platzsparend gelagert werden. Montage und Demontage herkömmlicher Halterungen dieser Art erfordern dagegen einen solchen Aufwand, daß die Halerungen zur Zwischenlagerung gewöhnlich nicht demontiert werden, was einen entsprechend großen Bedarf an Lagerplatz nach sich zieht.

In einer vorteilhaften Ausgestaltung der Erfindung sind Trägersäulen mit unterschiedlichen, insbesondere in einem Raster gestuften Längen vorgesehen. Unter Rückgriff auf einen Trägersäulen in unterschiedlichen Längen umfassenden Bausatz kann der Benutzer des Halterungssystems je nach Werkstück Trägersäulen in erforderlichen Längen auswählen und an den jeweiligen Anwendungsfall angepaßte Halterungen errichten.

In weiterer vorteilhafter Ausgestaltung der Erfindung weisen die Trägersäulen Einrichtungen für die Befestigung von Querverstrebungen auf. Zur Stabilisierung der Halterung können Querverstrebungen sowohl zwischen Trägersäulen als auch zwischen einer Trägersäule und der Basisplatte montiert werden. Entsprechend einer besonders bevorzugten Ausführungsform der Erfindung, nach der die Trägersäulen mit Längsnuten versehen sind, können die Querverstrebungen an den Trägersäulen oder der Basisplatte aber in den Nuten verschieb- und fixierbare Nutensteine in der gleichen Weise befestigt sein, wie die Trägersäulen auf der Basisplatte.

Bei den Trägersäulen handelt es sich vorzugsweise um ein Profil, wobei vorzugsweise Hohlprofile mit einem rechteckigen, insbesondere quadratischen, Querschnitt in Betracht kommen. Die vorzugsweise aus Aluminium und dadurch besonders leicht aber dennoch stabil mit hoher Maßhaltigkeit herstellbaren Hohlprofile lassen sich bei der Errichtung von Halterungen bequem handhaben, Die Aluminiumprofile können zum Schutz ihrer Oberfläche veredelt, insbesondere hart koadiert, sein.

In weiterer vorteilhafter Ausgestaltung der Erfindung können die Trägerköpfe Einrichtungen zur Positionsverstellung ihrer Anlagefläche gegen das Werkstück aufweisen. Durch diese Verstellmöglichkeiten können genaue Anpassungen der Anlagefläche an ein Werkstück vorgenommen werden, wobei die Einstellung dann so fixierbar ist, daß bei einer Wiedereinrichtung der Halterung nach einer Demontage die räumliche Anordnung der Anlageflächen reproduzierbar ist. Hierbei kommt sowohl eine Translationsverstellung in den drei Raumrichtungen als auch einen Drehverstellung um die drei Raumachsen in Betracht. Diese Verstellmöglichkeit erlaubt es, Standardträgersäulen des Bausatzes zu verwenden, wobei durch die Rasterstufung bedingte Höhenunterschiede durch die Verstellmöglichkeiten ausgeglichen werden können, so daß die Anlageflächen der Tragerköpfe in jeder beliebigen Raumposition zur Anordnung gebracht werden können.

In weiterer vorteilhafter Ausgestaltung der Erfindung weisen die Trägerköpfe zu ihrer Anlagefläche gegen das Werkstück öffnende Kanäle zur Unterdrucksansaugung des Werkstücks auf. Während mechanische Spanneinrichtungen, die das Werkstück gegen die Anlagefläche drücken, nur am Rand eines ausgedehnten Werkstücks eingesetzt werden können, kann eine solche Werkstückspannung durch Unterdruckansaugung an beliebigen Stellen des Werkstücks erfolgen. Zweckmäßig ist eine über einen größeren Bereich gegen das Werkstück anliegende Trägerfläche gebildet, so daß eine ausreichende Rundumabdichtung der Ansaugöffnung gesichert ist. Der Ansaugkanal im Trägerkopf kann an der dem Werkstück abgewandten Seite in den Innenraum eines die Trägersäule bildenden Hohlprofils öffnen oder mit einer durch das Hohlprofil geführten Unterdruckleitung verbunden sein. Zur Ansaugung wird dann im Hohlprofilinnenraum bzw. in der Leitung ein Unterdruck erzeugt.

Alternativ zur Unterdruckansaugung können Trägerköpfe mit Magnetspanneiementen eingesetzt werden.

In weiterer vorteilhafter Ausgestaltung der Erfindung können die Trägerköpfe aus mehreren Modulen zusammengesetzt sein, die einen unmittelbar mit der Trägersäule verbindbaren Basismodul, einen auf dem Basismodul angeordneten Verstellmodul und einen mit dem Werkstück in Kontakt kommenden Aufnahmemodul umfassen. Die einzelnen Modulteile können miteinander kombinierbar sein und untereinander austauschbar, so daß aus den einzelnen Modulen den jeweiligen Erfordemissen an den einzelnen Halterungsstellen über den Säulen angepaßte Trägerköpfe gebildet werden können.

Die Erfindung soll nun anhand von Ausführungsbeispielen und der beiliegenden, sich auf diese Ausführungsbeispiele beziehenden Zeichnungen weiter erläutert werden. Es zeigen:
- Fig. 1: ein Ausführungsbeispiel einer erfindungsgemäßen Halterung in einer Seitenansicht,
- Fig 2: das Ausführungsbeispiel von Fig. 1 in einer Draufsicht,
- Fig. 3: eine Detailansicht der Halterung von Fig. 1 und 2,
- Fig. 4 bis 6: Detailansichten einer weiteren Halterung,
- Fig. 7: eine in der Halterung von Fig. 4 bis 6 verwendete Paß-/ Schraubverbindung.
- Fig. 8: Module zur Bildung eines in dem erfindungsgemäßen Halterungssystem verwendbaren Werkstückträgerkopfes in einer Seitenansicht.
- Fig. 9: einen der Module von Fig. 8 in einer Draufsicht.
- Fig. 10 bis 12: ein weiteres Ausführungsbeispiel für einen Trägerkopfmodul in einer Querschnittsansicht, Seitenansicht bzw. Draufsicht,
- Fig. 13 bis 16: ein weiteres Ausführungsbeispiel für einen Tragerkopfmodul in einer Ansicht von unten, Seitenansichten bzw. Draufsicht,
- Fig. 17 bis 20: ein weiteres Ausführungsbeispiel für einen Trägerkopfmodul in einer Querschnittsansicht, Seitenansicht bzw. Draufsicht,
- Fig. 21 bis 24: ein weiteres Ausführungsbeispiel für einen Trägerkopfmodul in Querschnittsansichten, einer Seitenansicht bzw. einer Draufsicht, und
- Fig. 25: einen Trägerkopf aus verschiedenen Modulen in einer Explosionsdarstellung.

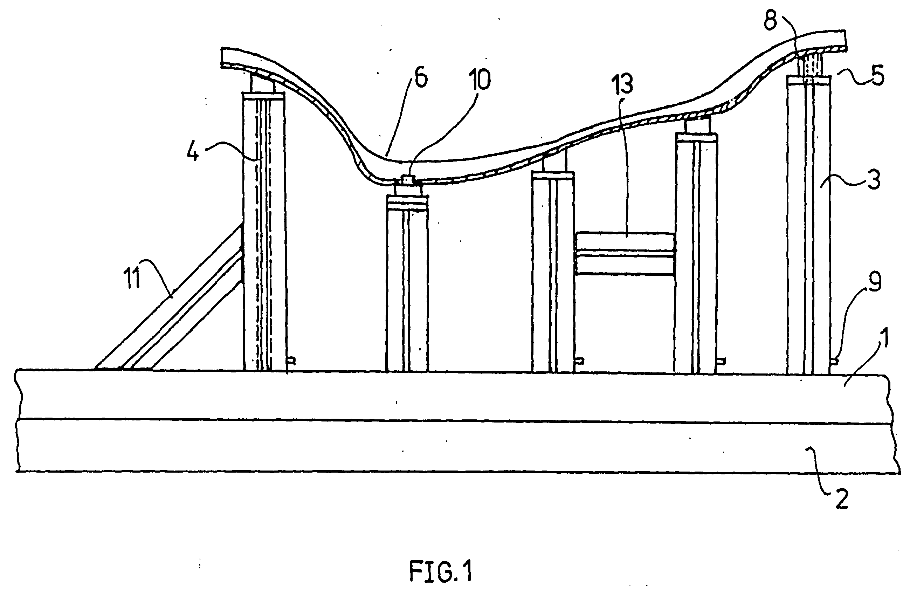

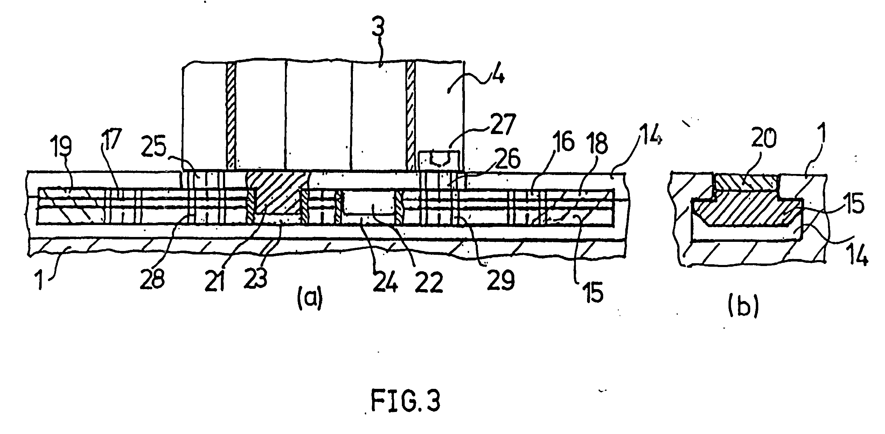

Mit dem Bezugszeichen 1 ist in der Fig. 1 eine Basisplatte mit hinterschnittenen Nuten 14 bezeichnet, die auf einer Grundplatte 2 einer (im übrigen nicht gezeigten) Koordinatenmeßeinrichtung in einer bestimmten Position in bezug auf die Koordinatenmeßeinrichtung angeordnet ist. Auf der Basisplatte 1 sind Trägersäulen 3 angeordnet, deren Befestigung auf der Basisplatte 1 über einen Nutenstein weiter unten anhand der Fig. 3 näher erläutert wird. Bei den Trägersäulen 3 handelt es sich in dem gezeigten Ausführungsbeispiel um Aluminiumhohlprofile mit einem quadratischen Querschnitt und einer Quadratseitenlänge von 50 mm. An jeder Seite der quadratischen Profile ist eine Längsnut 4 vorgesehen. Wie in Fig. 1 beispielhaft an einer der Säulen 3 durch Strichünien angedeutet ist, handelt es sich um hinterschnittene Nuten.

Auf jeder der Säulen 3 ist jeweils ein Trägerkopf 5 montiert. Auf den Trögerköpfen 5 liegt ein Werkstück 6 auf, z.B. ein aus Blech gepreßtes Karosserieteil oder ein instabiles, aus einem Kunststofflagenmaterial, z.B. durch Vakuumtiefziehen, hergestelltes Formteil.

Mit einer Ausnahme weisen alle Trägerköpfe 5 zu einer Werkstückanlagefläche öffnende Ansaugkanäle 8 auf, welche auf ihrer dem Werkstück 6 abgewandten Seite mit einer Unterdruckleitung in Verbindung stehen, die durch den Innenraum der durch das Hohlprofil gebildeten Trägersäulen 3 zu Sauganschlüssen 9 geführt sind. Die Saugöffnungen auf der Anlagefläche können von einem Dichtring umgeben sein. Ein instabiles Formteil kann verformungsfrei gehaltert werden.

Einer der Trägerköpfe 5 weist eine Anlagefläche auf, von der ein Dom 10 vorsteht, welcher in eine in dem Werkstück 6 vorgesehene Bohrung eingreift.

Mit den Bezugszeichen 11 bis 13 sind Querverstrebungen bezeichnet, die an den betreffenden Trägersaulen bzw. der Basisplatte 1 in gleicher Weise über einen Nutenstein befestigt sind wie die Trägersaulen 5 auf der Basisplatte 1. Die Verstrebungen 11 bis 13 sind in dem gezeigten Ausführungsbeispiel aus dem gleichen Aluminiumhohlprofil wie die Trägersäulen 3 gebildet.

Es wird nun auf Fig. 3 Bezug genommen, wo die Befestigung der Trägersäulen 3 auf der Basisplatte 1 näher erläutert ist.

Mit dem Bezugszeichen 15 ist in Fig. 3 ein länglicher Nutenstein bezeichnet, welcher in den Nuten 14 der Trägerplatte 1 (oder den Nuten 4 der Trägersaulen 3 bzw. Querverstrebungen 11 bis 13) verschiebbar ist. Der in Fig. 3a in Längsansicht und in Fig. 3b in einem Querschnitt dargestellte Nutenstein 15 weist Gewindebohrungen 16 und 17 für Fixierschrauben zur kraftschlüssigen Befestigung des Nutensteins 15 in der betreffenden Nut auf. Schräg zu der Gewindebohrung 16 bzw. 17 erstreckt sich jeweils ein Stiftkanal 18 bzw. 19 für einen Fixierstift, der in eine Ausnehmung in der Fixierschraube eingreift und so ein Lösen der Fixierschraube verhindert.

Mit dem Bezugszeichen 20 ist ein über nicht gezeigte Schraubverbindungen mit der Trägersäule verbindbarer Befestigungssteg bezeichnet, von welchem Zentrierzapfen 21 und 22 vorstehen, welche in Zentrierbohrungen 23 und 24 in dem Nutenstein 15 eingreifen. Der Verbindungssteg 20 weist ferner Bohrungen 25 und 26 für eine Schraubverbindung mit dem Nutenstein 15 über Gewindebohrungen 28 und 29 im Nutenstein 15 auf, wobei im verbundenen Zustand der Verbindungssteg 20 in die Nut 14 versenkt ist und die Tragersäule 3 stimseitig zur Anlage gegen die Basisplatte 14 kommt. Bei 27 ist eine Schraube für eine solche Schraubverbindung angedeutet, wobei der Schraubenkopf in der Nut 4 angeordnet und dadurch zur Drehung der Schraube zugänglich ist. Wie bereits erwähnt, wird der Nutenstein 15 in gleicher Weise zur Herstellung der Verbindungen zwischen den Trägersäulen und den Querverstrebungen 11 bis 13 verwendet.

Zur Anordnung der Trägersäulen in gewünschten Positionen auf der Basisplatte 1 wird der jeweilige Nutenstein 15 in der entsprechenden Position in der Nut angeordnet und mit Hilfe der in den Gewindebohrungen 16 und 17 eingreifenden Fixierschrauben befestigt. Die Fixierschrauben werden dann durch Stifte in den schräg zu den Gewindebohrungen verlaufenden Stiftkanäle 18 und 19 gesichert. Die Trägersäule 3 wird mit dem daran befestigten Verbindungssteg 20 voran auf den Nutenstein 15 aufgesetzt, wobei die Zentrierzapfen 21 und 22 des Verbindungsstegs 20 in die Zentrierbohrungen 23 und 24 des Nutensteins 15 eingreifen.

Über die Bohrungen 25,26 im Verbindungssteg 20 und die Gewindebohrungen 28.29 im Nutenstein 15 erfolgt dann eine Schraubverbindung des an der Trägersäule 3 befestigten Verbindungsstegs 20 mit dem Nutenstein 15, wobei zur Herstellung dieser Schraubverbindung mit einem entsprechenden Schraubwerkzeug die Nut 4 der Trägersäule 3 den erforderlichen Freiraum bietet.

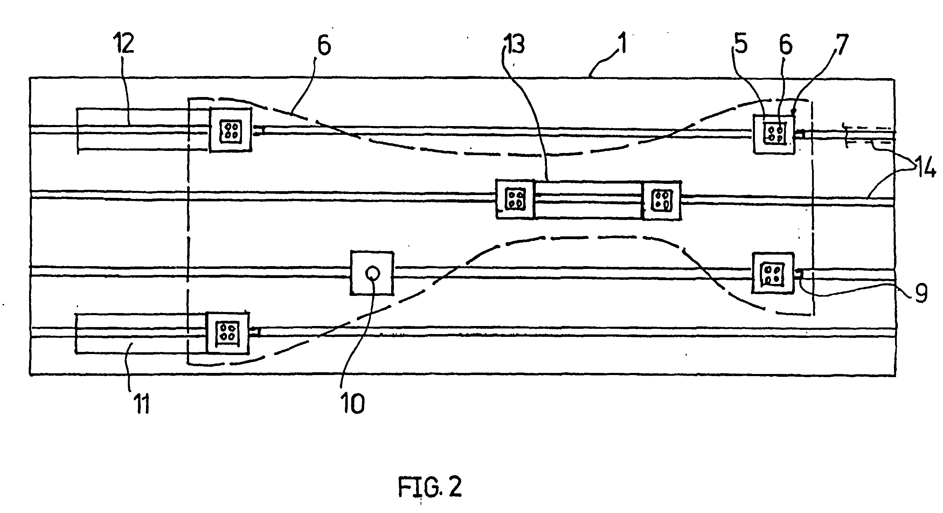

Zur Demontage der in den Fig. 1 und 2 gezeigten Halterung werden die genannten Schraubverbindungen gelöst und die Trägersaulen unter Lösung der Zentrierzapfen 21,22 aus den Zentrierbohrungen 23,24 von der Basisplatte abgenommen. In gleicher Weise erfolgt die Lösung der Querverstrebungen 11 bis 13 von den betreffenden Trägersäulen.

Der Nutenstein verbleibt in der Basisplatte an Ort und Stelle und bildet so einen Sitz, der es gestattet, die Halterung unter reproduzierbarer Anordnung aller Halterungsteile mit geringem Aufwand neu zu errichten. Die Reproduzierbarkeit der Anordnung ist einerseits dadurch gewährleistet, daß die Nutensteine 15, gesichert durch die Stifte in den schräg verlaufenden Stiftkanälen 18 und 19, von sich aus ihrer kraftschlüssigen Verbindung in der Nut nicht lösen können. Andererseits sorgen die in die Zentrierbohrungen 23,24 eingreifenden Zentrierzapfen 21,22 für eine paßgenaue Anordnung der Trägersäulen 3 in ihrer frühreren Position.

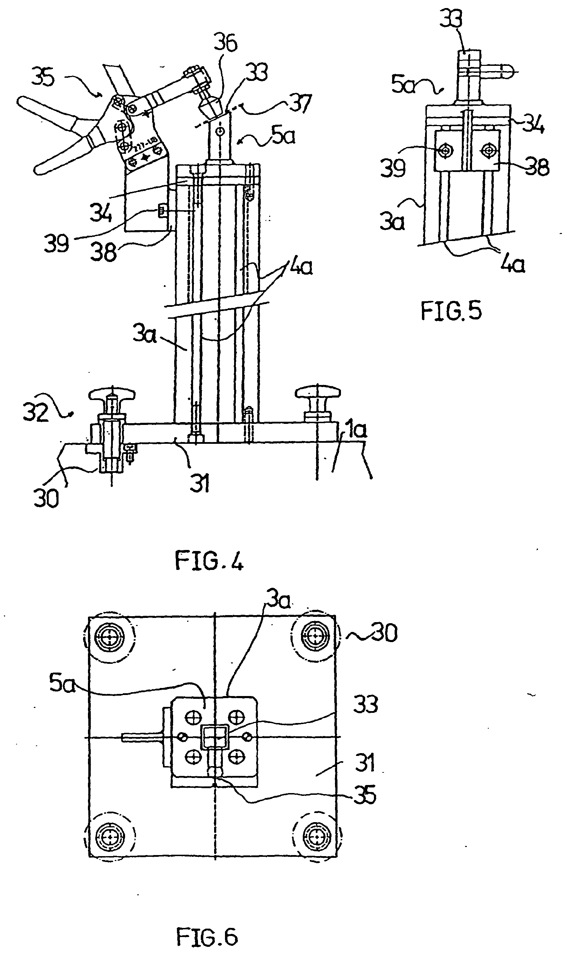

Es wird nun auf die Fig. 4 bis 6 Bezug genommen, wo Teile eines weiteren Ausführungsbeispiels einer Halterungssystem gezeigt sind.

Mit dem Bezugszeichen 1a ist eine Basisplatte bezeichnet, bei der es sich in dem gezeigten Ausführungsbeispiel um die Grundplatte einer Koordinatenmeßeinrichtung handelt. In die Basisplatte 1 sind im Rasterabstand von 200 mm Paßbohrungen 30 eingebracht, von denen in Fig. 6 vier Paßbohrungen gezeigt sind. Auf der Basisplatte 1a können je nach Werkstück an verschiedenen Stellen in der in Fig. 1 gezeigten Weise Trägersäulen 3a montiert sein, wobei die Trägersäulen 3a über eine Fußplatte 31 mit der Basisplatte 1a verschraubt sind. Bei den Trägersäulen 3a handelt es sich wie bei dem vorangehend beschriebenen Ausführungsbeispiel um Aluminiumhohlprofile mit einem quadratischen Querschnitt. Im Unterschied zu den Trägersäulen 3 des vorangehenden Ausführungsbeispiels beträgt die Quadratseitenlänge 100 mm, und es sind zwei Längsnuten 4a an jeder Profilseite vorgesehen.

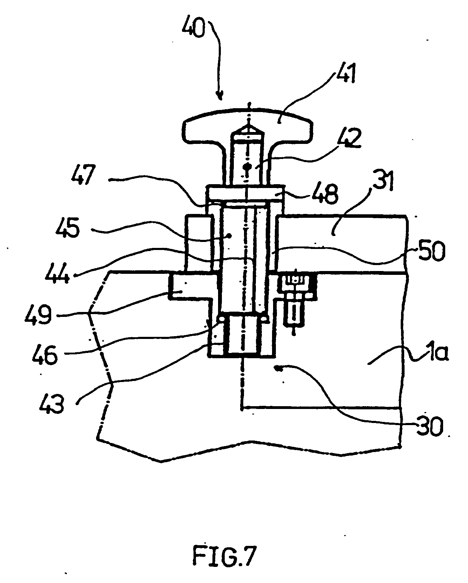

Der Tragerstempel 3a mit der daran durch Schrauben befestigten Fußplatte 31 ist über die Fußplatte 31 mit der Basisplatte über Schraubverbindungen 32 verschraubt. Die Schraubverbindung 32 wird weiter unten anhand der Fig. 7 näher erläutert.

Auf der Trägersäule ist ein Trägerkopf 5a mit einer Werkstückanlagefläche 33 angebracht, wobei der Trägerkopf 5a über eine Zwischenplatte 34 mit der Tragersäule 3a verschraubt ist. An dem Trägerkopf 5a ist ein Meßanschlag mit einem Kugelkopf angebracht.

Mit dem Bezugszeichen 35 ist eine Spanneinrichtung mit einem Spannkopf 36 bezeichnet. Zwischen der Werkstückanlagefläche 33 und dem Spannkopf 36 ist ein Werkstück 37 spannbar. Die Spanneinrichtung 35 ist über ein Fußteil 38 an der Trägersäule 3a befestigt, wobei durch Schrauben 39, die in Gewindebohrungen nicht gezeigter Nutensteine eingreifen, zwischen der Befestigungsplatte 38 und den hinterschnittenen Nuten 4a eine Klemmverbindung hergestellt ist.

Es wird nun auf Fig. 7 Bezug genommen, wo die Schraubverbindung 32 für die Verbindung der Fußplatte 31 mit der Basisplatte 1a näher erläutert ist.

Mit dem Bezugszeichen 40 ist in Fig. 7 eine Schraube mit einem Drehknopf 41 aus Kunststoff bezeichnet. Der Drehknopf 41 ist mit einem Schraubenbolzen 42 verbunden, welcher an seinem dem Drehknopf abgewandten Seite eine Gewinde 43 aufweist. Auf den Schraubenbolzen ist eine mit einem Längsschlitz 44 versehene Buchse 45 aufgesteckt. In die Endöffnungen der Buchse 45 steht jeweils ein Konusring 46 bzw. 47 hinein. Der Konusring 46 kommt gegen eine Ringschulter zum Anschlag, die in einer in die Basisplatte 1a eingesetzten Zentrierbuchse 49 gebildet ist. Der Konusring 47 liegt auf seiner der geschlitzten Buchse 45 abgewandten Seite gegen eine Anschlagplatte 48 an. Mit dem Bezugszeichen 50 ist eine weitere Zentrierbuchse bezeichnet, die in eine Bohrung in der Fußplatte 31 eingesetzt ist.

Zur Befestigung der anhand der Fig. 4 bis 6 beschriebenen Trägersäule auf der Basisplatte 1a über die Fußplatte 31 werden wenigstens an diagonal gegenüberliegenden Paßbohrungen 30 Verschraubungen gemäß Fig. 7 vorgenommen, wobei das Gewinde 43 des Schraubenbolzens 42 in ein entsprechendes Innengewinde in der Zentrierbuchse 49 eingreift. In der Endphase des Schraubvorgangs kommt es unter dem Einfluß der axial in die geschlitzte Buchse 45 vordnngenden Konusringe 46,47 zu einer Buchsenaufweitung und damit zu einer genauen Ausrichtung der Zentrierbuchsen zueinander. Dadurch läßt sich erreichen, daß die Trägersäule 3a auf der Basisplatte 1a sehr genau positioniert ist, weitaus genauer als es allein über die mit Spiel behaftete Schraubverbindung zwischen der Fußplatte 31 und der Basisplatte 1a möglich wäre. Selbst bei Wärmeausdehnung der Platten kommt es durch die sich aufspreizende Buchse 45 letztlich zu einer genauen Reproduktion der Anordnung der Trägersäule auf der Basisplatte 1a entsprechend den auf der Basisplatte 1a.

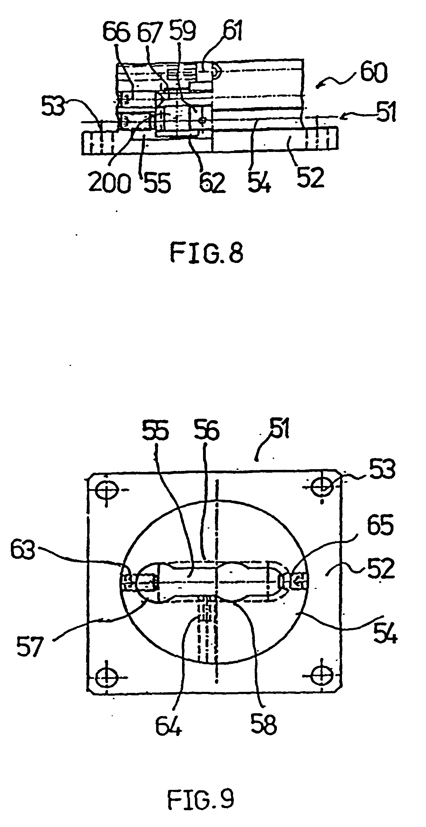

Im folgenden werden anhand der Fig. 8 bis 25 Modulteile beschrieben, aus denen sich Trägerköpfe zusammensetzen lassen, die in den vorangehend erläuterten Halterungssystemen ähnlichen Vorrichtungen verwendet werden können und die Möglichkeit zur Endanpassung der Halterung an bestimmte Werkstücke bieten.

Mit dem Bezugszeichen 51 ist in den Fig. 2 und 3 ein Basismodul bezeichnet, der eine Grundplatte 52 mit Bohrungen 53 an vier Ecken aufweist, über die der Basismodul 51, ggf. über eine Zwischenplatte, stimseitig auf eine Trägersäule 3 mit quadratischem Querschnitt aufschraubbar ist. Von der Grundplatte 52 erhebt sich ein Vorsprung 54 mit einer Führungsnut 55, welche sich in der Tiefe bis in die Grundplatte 52 hinein erstreckt. Wie Strichlinien 56 in Fig. 3 andeuten, ist die Nut 55 teilweise hinterschnitten. Lediglich an kreisförmigen Aufweitungen 57 und 58 liegt keine solche Hinterschneidung vor.

In der Anordnung von Fig. 8 greift in die Nut 55 als darin verschiebbarer Nutenstein ein längliches Fußteil 59 eines auf dem Basismodul 51 angeordneten weiteren Moduls 60 ein. Der Modul 60 weist eine der Führungsnut 55 im Basismodul 51 entsprechende Führungsnut 61 aufweist, welche in der Draufsicht die Nut 55 im Basismodul 51 kreuzt.

Durch eine Bohrung in dem länglichen Fußteil 59 erstreckt sich ein Bolzen 200, an dessen einem Ende eine über das Fußteil 59 vorstehende, in die Hinterschneidungen der Nut 55 eingreifende Platte 62 angebracht ist. Das in der Nut 55 verschiebbare Fußteil 59 ist als vom Hauptblock des Moduls 60 getrenntes Teil ausgebildet, das in eine Ausnehmung in dem Hauptblock eingepaßt ist.

Das Bezugszeichen 66 weist auf eine in dem weiteren Modul 60 vorgesehene Madenschraube mit einer Konusspitze hin, die in eine entsprechend der Konusspitze eingesenkte Stimfläche eines Bolzens 67 eingreift. Auf der der Madenschraube 60 gegenüberliegenden Seite des Bolzens 67 ist (in Fig. 8 nicht sichtbar) eine der Schraube 66 entsprechende Madenschraube angeordnet. Der Bolzen 67 ist durch eine Querbohrung in dem Bolzen 200 geführt und seine der Konusfläche entsprechende Stimfläche ist zu der Konusspitze der Madenschraube 66 bzw. der ihr gegenüberliegenden Madenschraube etwas versetzt angeordnet.

Mit den Bezugszeichen 63 und 65 sind in dem Vorsprung 54 vorgesehene Stellschrauben bezeichnet, mit deren Hilfe das Fußteil 59 in der Nut 55 in einer gewünschten Stellung verschiebbar ist.

Zur Anbringung des weiteren Moduls 60 auf dem Basismodul 51 wird die Platte 62 an dem Bolzen 200 durch eine der Aufweitungen 57 oder 58 in die Nut 55 eingeführt und der weitere Modul 60 verschoben, so daß die Platte 62 in einen hinterschnittenen Teil der Führungsnut 55 gelangt. Mit Hilfe der Stellschrauben 63,65 läßt sich der Modul 60 auf dem Modul 51 in eine gewünschte Stellung verschieben. In der gewünschten Stellung wird die Madenschraube 66 und die ihr gegenüberliegende nicht gezeigte Madenschraube angezogen. Durch den erwähnten Versatz der Konusflächen kommt es dadurch zu einer Anhebung der Platte 62 und damit zu einer gegenseitigen Verklemmung der Module 51,60. Schon vor der Verstellung mit Hilfe der Stellschrauben 63,65 kann durch die Madenschrauben eine leichte Verklemmung der Module erfolgen, wobei diese Verklemmung vorteilhaft eine Dämpfung erzeugt, welche die Feineinstellung mit Hilfe der Stellschrauben 63,65 erleichtert. Zur endgültigen Arretierung des Moduls 60 in einer bestimmten Position auf dem Modul 61 kann der Fußteil 59 durch eine Bohrbuchse 64 hindurch angebohrt und einen durch die Bohrbuchse geführten Stift in der eingestellten Position fixiert werden. Auf dem Modul 60 könnte ein weiterer Modul in der vorangehend beschriebenen Weise befestigt werden, z.B. ein Modul mit einer einen Trägeranschlag bildenden Werkstückanlagefläche. Dieser weitere Modul wäre dann in der Führungsnut 61 senkrecht zur Führungsnut 58 und der Trägeranschlag damit in zwei zueinander senkrechten Koordinatenrichtungen (x,y) verschiebbar.

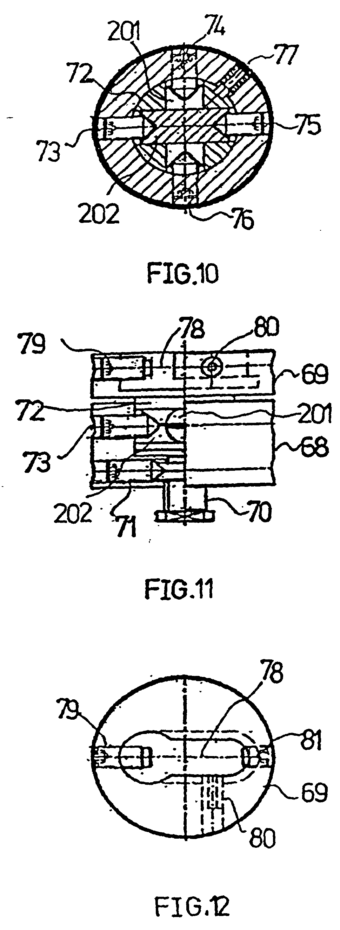

Es wird nun auf die Fig. 10 bis 12 Bezug genommen, wo ein weiterer, z.B. auf den Basismodul 51 aufsetzbarer Trägerkopfmodul gezeigt ist.

Dieser Modul besteht aus einem unteren Teil 68 und einem oberen Teil 69, wobei der untere Teil 68 ein Fußteil 70 aufweist, das dem Fußteil 59 des Moduls 60 von Fig. 8 entspricht. Eine Madenschraube 71 entspricht der Madenschraube 66 von Fig. 8.

Der obere Teil 69 des in den Fig. 10 bis 12 gezeigten Moduls weist einen zylindrischen Zapfen 72 auf, der in eine entsprechende Ausnehmung in dem unteren Teil 68 des Moduls eingreift, in der axial entlang einer weiteren Koordinate (z) verschiebbar ist. In dem zylindrischen Zapfen 72 sind sich kreuzende Bohrungen vorgesehen, durch welche Bolzen 201 und 202 geführt sind. Damit sich die Bolzen 201 und 202 entsprechend den sich kreuzenden Bohrungen ebenfalls kreuzen können, sind sie über einen Teil ihrer Zylinderlänge halbiert. An den Enden weisen die Bohrungen konische Vertiefungen bzw. einem halben Konus entsprechende Ausnehmungen auf, in welche Madenschrauben 73 bis 76 eingreifen, für die in dem unteren Teil 68 Gewindebohrungen vorgesehen sind. Jeweils die Achsen der Madenschrauben 73 und 75 bzw. 74 und 76 sind zueinander ausgerichtet und in Richtung der Z-Koordinate derart versetzt zueinander angeordnet, daß durch Drehung an dem Madenschraubenpaar 73,75 der zylindrische Zapfen 72 in einer Z-Richtung und durch Drehung an den Madenschrauben 74,76 der Zapfen 72 in der zu dieser Richtung entgegengesetzten Richtung verschiebbar ist.

Der zylindrische Zapfen 72 ist über eine Madenschraube 77 in einer gewünschten Drehstellung sowie in einer gewünschten Verschiebungsstellung arretierbar. Zur Arretierung wäre auch eine Verstiftung denkbar. Es ist ferner möglich, den Zapfen 72 gegen Drehung durch eine Feder zu sichem, die in eine Nut in dem oberen Teil und eine Nut in dem Zapfen eingreift.

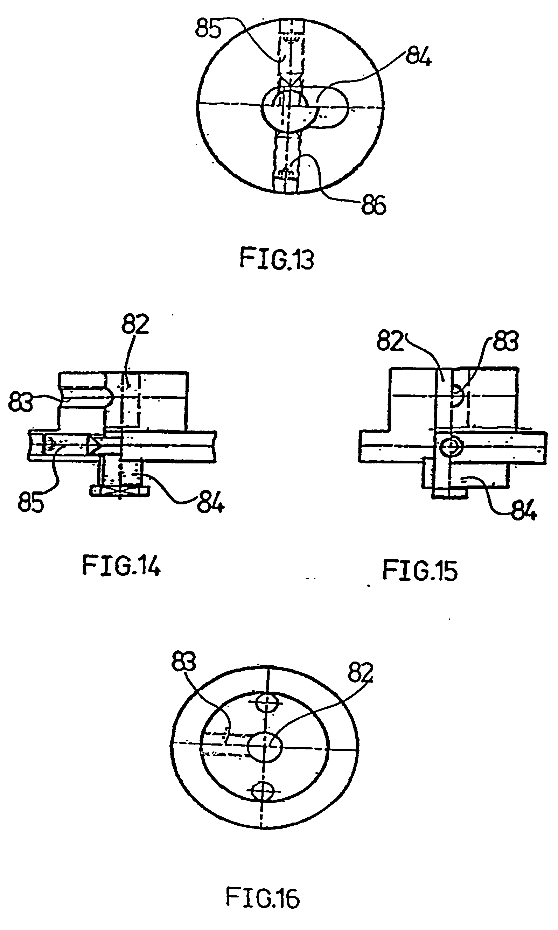

Der obere Teil 69 des Moduls von Fig. 10 bis 12 weist eine teilweise hinterschnittene Nut 78 auf, in welcher ein dem Fußteil 70 bzw. 59 entsprechendes Fußteil eines auf den Modul aufsetzbaren weiteren Moduls, z.B. des in Fig. 13 bis 16 gezeigten Moduls, durch Madenschrauben 79,81 verschiebbar und durch eine Verstiftung 80 arretierbar ist.

In dem Modul von Fig. 13 bis 16 ist ein Steckloch 82 vorgesehen, so daß ein weiterer Trägerkopfmodul auf diesen Modul aufsteckbar ist, z.B. der in Fig. 1 gezeigte Modul mit dem Dom 10. In dem Steckloch 82 ist ein Steckzapfen durch eine Schraube arretierbar, welche in eine Gewindebohrung 83 eingedreht werden kann. Ein in den Fig. 13 bis 16 gezeigtes Fußteil 84 entspricht dem Fußteil 59 von Fig. 8. Ferner entsprechen Madenschrauben 85 und 86 der Madenschraube 66 von Fig. 8.

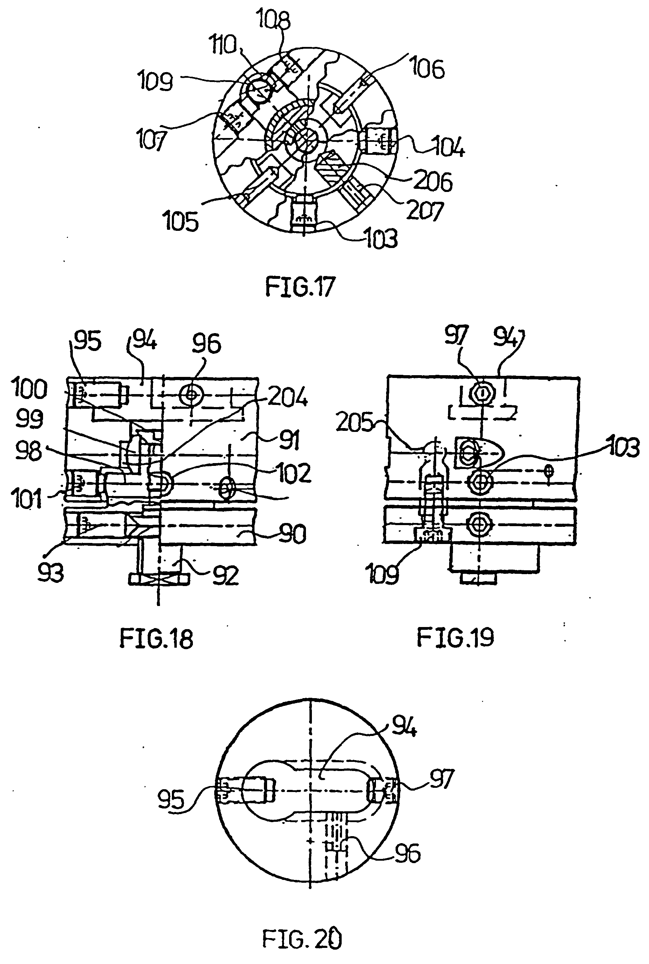

Es wird nun auf die Fig. 17 bis 20 Bezug genommen, wo ein weiterer Trägerkopfmodul mit einem oberen Teil 91 und einem unteren Teil 90 gezeigt ist. Der untere Teil 90 enthält ein Fußteil 92 und Madenschrauben 93 entsprechend dem Fußteil 59 bzw. der Madenschraube 66 von Fig. 8. An der Oberseite des oberen Teils 91 sind eine Führungsnut 94 sowie Madenschrauben 95,97 sowie eine Verstiftungsbohrung 96 vorgesehen, die der Nut 78 bzw. den Teilen 79 bis 81 von Fig. 11 und 12 entsprechen.

Von dem unteren Teil 90 erstreckt sich ein gestufter Ansatz 98 in eine entsprechende Ausnehmung in den oberen Teil 91 hinein. Auf der Stufe des Ansatzes 98 ist ein Ringteil 99 mit einer Außenfläche in der Form eines Kugelabschnitts angeordnet. Der Ringteil 99 wird durch den Kopf einer in den Ansatz 98 gedrehten Schraube 100 festgehalten. Der Ringteil 99 mit der kugelförmigen Außenfläche ist in einem weiteren Ringteil 204, der eine der kugelförmigen Außenfläche entsprechende Gegenfläche aufweist, drehbar. Der Ringteil 204 ist in eine Ringschulter in dem oberen Teil 91 des Moduls eingesetzt und dort durch Arretierungsschrauben 105,106 gehaltert. Der gestufte Ansatz 98 weist eine kugelförmige Außenfläche auf, an der vier Stellschrauben 101 bis 104 angreifen. In tangentialer Anordnung sind Stellschrauben 107 und 108 vorgesehen, welche gegen einen mit dem unteren Teil 90 verbind baren Schraubenbolzen 109 anlegbar sind, der in eine Langlochausnehmung 110 in dem oberen Teil 91 des in den Fig. 11 bis 14 gezeigten Moduls hineinragt. Die Stellschrauben 107 und 108 greifen an einem kugelförmigen Kopf 110 des Bolzens 109 an.

Der Oberteil 91 dieses Moduls kann über die Schrauben 101 bis 106 in beliebiger Richtung gegen die Zylinderachse des unteren Teils 90 verschwenkt und in der gewünschten Schwenkstellung arretiert werden.

Mit dem Bezugszeichen 206 ist eine Bohrbuchse bezeichnet, die zu einem in dem Ansatz 98 vorgesehenen Einsatzstück 207 ausgerichtet ist. Zur Fixierung kann das Einsatzstück 207 durch die Bohrbuchse 206 hindurch angebohrt und so das Oberteil 91 des Moduls mit dem unteren Teil 90 verstiftet werden. Bei emeuter Fixierung braucht nur das Einsatzstück 207 ausgetauscht zu werden.

Neben der Verschwenkung in zwei Drehrichtungen, in dem gezeigten Beispiel um maximal wenige Grad, läßt sich der obere Teil 91 des Moduls um seine Zylinderachse im Bereich der Langlochausdehnung 110 geringfügig durch die Stellschrauben 107,108 in einer dritten Drehrichtung verstellen.

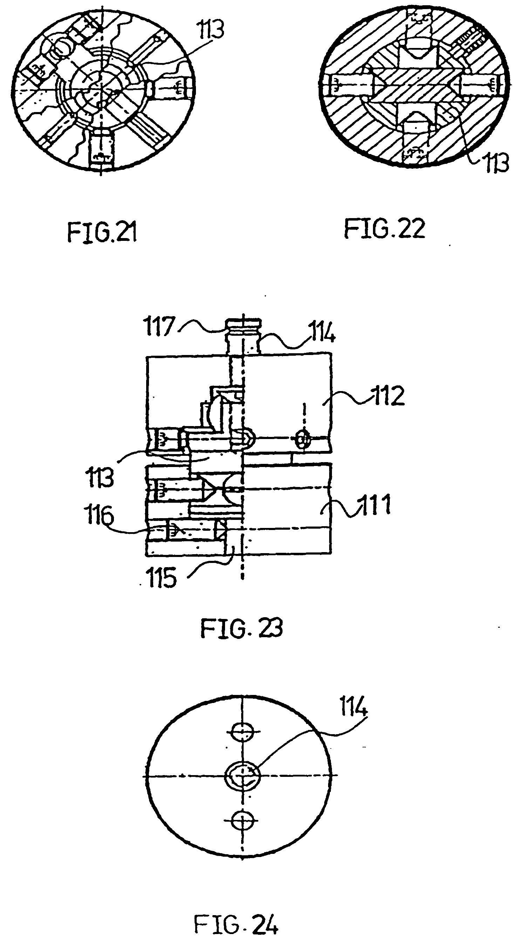

Es wird nun auf die Fig. 21 bis 24 Bezug genommen, wo ein Modul mit einem unteren Teil 111 und einem oberen Teil 112 gezeigt ist. Zwischen dem unteren Teil 111 und dem oberen Teil 112 erstreckt sich ein Zwischenstück 113. Der untere Teil des Zwischenstücks 113 entspricht dem Zapfen 72 von Fig. 10. Der obere Teil des Zwischenstücks 113 entspricht dem gestuften Ansatz 98 von Fig. 18. Entsprechend sind weitere in den Fig. 10 und 18 beschriebene Teile zur Winkel- oder Höhenverstellung des Moduls vorgesehen, worauf hier nicht weiter eingegangen wird.

Der obere Teil 112 weist einen Verbindungszapfen 114 auf. Der untere Teil 111 ist mit einer Ausnehmung 115 für den Eingriff eines solchen Verbindungszapfens 114 versehen. Mit dem Bezugszeichen 116 ist eine Madenschraube mit einer Konusspitze für den Eingriff in eine der Ringnut 117 des Zapfens 114 entsprechende Ringnut bezeichnet.

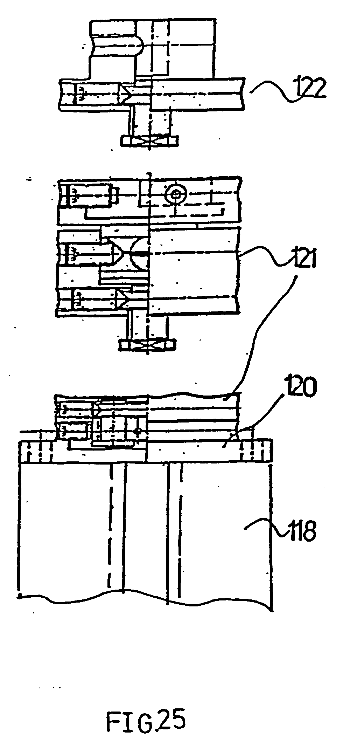

Es wird nun auf Fig. 25 Bezug genommen, wo in einer Explosionsdarstellung ein auf einer Trägersäule 118 angeordneter Trägerkopf dargestellt ist. Der Trägerkopf weist einen Basismodul 120 auf, der dem Basismodul 51 von Fig. 8 entspricht. Auf dem Basismodul ist ein Zwischenmodul 121 angeordnet, welcher dem Modul von Fig. 10 bis 12 entspricht. Ein auf den Modul 121 aufgesetzter weiterer Zwischenmodul 122 entspricht dem in Fig. 13 bis 16 gezeigten Modul. Der Trägeranschlag eines auf den Zwischenmodul 122 aufgesteckten Anschlagmoduls ist in drei zueinander senkrechten Koordinatenrichtungen translatorisch verstellbar.

Die Systemkomponenten des vorangehend beschriebenen Halterungs- und Spannsystems lassen sich ausschließlich mit Hilfe handelsüblicher Standardwerkzeuge montieren, demontieren und einstellen.

Da die Führungsnuten und Fußteile bzw. Verbindungszapfen und Zapfenstecklöcher übereinstimmen, lassen sich beliebige Modulkombinationen und damit dreidimensional sowohl translatorisch als auch rotatorisch verstellbare Trägerköpfe zusammenstellen.

## Patentansprüche

1. Halterungssystem für die Anordnung von Werkstücken, insbesondere aus Blech oder anderem Lagenmaterial hergestellten Formteilen (6), in einer Meßposition, mit einer Nuten (14) aufweisenden Basisplatte (1), auf der Basisplatte (1) von dieser vorstehend montierbaren Trägersäulen (3) und auf den Trägersäulen (3) angeordneten Tragerköpfen (5) für die Aufnahme des Werkstücks (6), wobei zur reproduzierbaren Anordnung der Trägersäulen auf der Basisplatte (1) Paßsitze (15, 23, 24) für die Trägerstempel herstellbar sind,
**dadurch gekennzeichnet,**
**daß** zur Bildung der Paßsitze in den Nuten (14) verschiebbare und in gewünschten Positionen fixierbar Nutensteine (15) vorgesehen sind, die von sich aus eine kraftschlüssige Verbindung mit der Nut (14) eingehen und an denen die Trägersäulen (3) befestigbar sind.

2. Halterungssystem nach Anspruch 1,
**dadurch gekennzeichnet,**
**daß** Trägersäulen (3) mit unterschiedlichen, insbesondere in einem Raster gestuften. Längen vorgesehen sind.

3. Halterungssystem nach Anspruch 1 oder 2,
**dadurch gekennzeichnet,**
**daß** die Trägersäulen (3) Einrichtungen für die Befestigung von Querverstrebungen (11-13) aufweisen.

4. Halterungssystem nach einem der Ansprüche 1 bis 3,
**dadurch gekennzeichnet,**
**daß** die Trägersäulen (3) Längsnuten (4) aufweisen.

5. Halterungssystem nach Anspruch 4,
**dadurch gekennzeichnet,**
**daß** die Querverstrebungen (11-13) an den Trägersäulen (3) Ober in den Nuten (4) verschieb- und fixierbare Nutensteine (15) befestigbar sind.

6. Halterungssystem nach einem der Ansprüche 1 bis 5,
**dadurch gekennzeichnet,**
**daß** die Trägersäulen (3) ein Profil, insbesondere ein Hohlprofil, aufweisen.

7. Halterungssystem nach einem der Ansprüche 1 bis 6,
**dadurch gekennzeichnet,**
**daß** die Trägerköpfe (5) Einrichtungen zur Positionsverstellung ihrer Anlagefläche gegen das Werkstück aufweisen.

8. Halterungssystem nach einem der Ansprüche 1 bis 6,
**dadurch gekennzeichnet,**
**daß** die Trägerköpfe (5) zu ihrer Werkstückanlagefläche öffnende Kanäle (8) zur Unterdruckansaugung des Werkstücks (6) aufweisen.

## Claims

1. Support system for the arrangement of workpieces, particularly formed parts (6) manufactured from sheet metal or other layered material, in a measurement position, having a base plate (1) with grooves (14), bearing stands (3) which can be mounted on the base plate (1) so as to project from the latter, and bearing heads (5), arranged on the bearing stands (3), for receiving the workpiece (6), it being possible to manufacture snug fits (15, 23, 24) for the bearing plungers for reproducible arrangement of the bearing stands on the base plate (1),
**characterized**
**in that**, in order to form the snug fits, sliding blocks (15) are provided in the grooves (14), which blocks are displaceable and can be fixed in desired positions, which blocks themselves form a nonpositive connection with the groove (14) and to which blocks the bearing stands (3) can be fastened.

2. Support system according to Claim 1,
**characterized**
**in that** the bearing stands (3) are provided in various lengths which are particularly stepped with reference to a grid.

3. Support system according to Claim 1 or 2,
**characterized**
**in that** the bearing stands (3) have devices for fastening cross-beams (11-13).

4. Support system according to one of Claims 1 to 3,
**characterized**
**in that** the bearing stands (3) have longitudinal grooves (4).

5. Support system according to Claim 4,
**characterized**
**in that** the cross-beams (11-13) can be fastened to the bearing stands (3) by means of sliding blocks (15) which are displaceable and can be fixed in the grooves (4).

6. Support system according to one of Claims 1 to 5,
**characterized**
**in that** the bearing stands (3) comprise a profiled section, particularly a hollow section.

7. Support system according to one of Claims 1 to 6,
**characterized**
**in that** the bearing heads (5) have devices for positive displacement of their bearing surfaces towards the workpiece.

8. Support system according to one of Claims 1 to 6,
**characterized**
**in that**, for holding the workpiece (6) by suction, the bearing heads (5) have ducts (8) which open towards their workpiece bearing surface.

## Revendications

1. Système de fixation pour l'agencement de pièce à usiner, notamment de pièces façonnées (6) fabriquées en tôle ou en un autre matériau en nappe, dans une position de mesure, comprenant une plaque de base (1) présentant des rainures (14), des colonnes de support (3) pouvant être montées sur la plaque de base (1) en saillie depuis celle-ci et des têtes de support (5) disposées sur les colonnes de support (3) pour recevoir la pièce à usiner (6), des ajustements fins (15, 23, 24) pour les matrices de support pouvant être fabriqués pour l'agencement reproductible des colonnes de support sur la plaque de base (1),
**caractérisé en ce que**
pour la formation des ajustements fins, on prévoit des coulisseaux (15) déplaçables dans les rainures (14) et pouvant être fixés dans des positions souhaitées, lesquels entrent d'eux-mêmes en liaison par engagement par force avec la rainure (14) et sur lesquels les colonnes de support (3) peuvent être fixées.

2. Système de fixation selon la revendication 1,
**caractérisé en ce que**
les colonnes de support (3) sont pourvues de longueurs différentes, notamment étagées suivant une trame.

3. Système de fixation selon la revendication 1 ou 2,
**caractérisé en ce que**
les colonnes de support (3) présentent des dispositifs pour la fixation d'entretoises transversales (11-13).

4. Système de fixation selon l'une quelconque des revendications 1 à 3,
**caractérisé en ce que**
les colonnes de support (3) présentent des rainures longitudinales (4).

5. Système de fixation selon la revendication 4,
**caractérisé en ce que**
les entretoises transversales (11-13) peuvent être fixées aux colonnes de support (3) par le biais de coulisseaux (15) pouvant être déplacés et fixés dans les rainures (4).

6. Système de fixation selon l'une quelconque des revendications 1 à 5,
**caractérisé en ce que**
les colonnes de support (3) présentent un profilé, notamment un profilé creux.

7. Système de fixation selon l'une quelconque des revendications 1 à 6,
**caractérisé en ce que**
les têtes de support (5) présentent des dispositifs pour le réglage de la position de leur face d'appui contre la pièce à usiner.

8. Système de fixation selon l'une quelconque des revendications 1 à 6,
**caractérisé en ce que**
les têtes de support (5) présentent des canaux (8) s'ouvrant vers leur face d'appui contre la pièce à usiner, pour l'aspiration par dépression de la pièce à usiner (6).
